(19) Europäisches Patentamt
European Patent Office
Office européen des brevets

(11) EP 0 709 693 A1

(12) EUROPÄISCHE PATENTANMELDUNG

(43) Veröffentlichungstag:
01.05.1996 Patentblatt 1996/18

(51) Int. Cl.⁶: $G01S\ 7/539$, $G01S\ 15/89$

(21) Anmeldenummer: 95116062.1

(22) Anmeldetag: 11.10.1995

(84) Benannte Vertragsstaaten:
DE FR GB

(30) Priorität: 28.10.1994 DE 4438643

(71) Anmelder: SIEMENS AKTIENGESELLSCHAFT
D-80333 München (DE)

(72) Erfinder: Vossiek, Martin, Dipl.-Ing.
D-59075 Hamm (DE)

(54) **Verfahren zur Objekterkennung**

(57) Die Aufgabe dieses Verfahrens zur Objekterkennung mittels Ultraschall ist es, die Störunempfindlichkeit zu erhöhen, die Lage des Objekts bezüglich des Untergrunds bestimmen zu können und den Rechenaufwand zu minimieren.

Bei dem erfindungsgemäßen Verfahren mit mehreren Sendewandlern und Empfangswandlern, sendet einer der Sendewandler ein Signal aus, das von den Empfangswandlern, nachdem es am Objekt oder am Untergrund reflektiert wurde, empfangen wird. Anschließend wird der Vorgang mit jedem anderen Sendewandler wiederholt. Jedes empfangene Signal ($f_{Rik}$) wird entzerrt, indem für jede interessierende Höhe (z') die Laufzeit ($\tilde{\tau}_{ik}$) berechnet wird, die das Signal vom Sendewandler zum Objekt und zurück zum Empfangswandler benötigen darf, in dem zu der berechneten Laufzeit ($\tilde{\tau}_{ik}$) die korrespondierende Amplitude aus dem Empfangssignal bestimmt wird, und in dem die interessierenden Höhen (z') und die Amplituden das entzerrte Signal ($\tilde{f}_{Rik}$) darstellen. Aus den entzerrten Signalen werden Summensignale und gegebenenfalls Maximumsignale gebildet. Aus diesen werden charakteristische Merkmale, wie Amplitude oder Lage der Maxima herangezogen, um diese mit gespeicherten Merkmalen zu vergleichen. Weitere Merkmale können aus einer holographischen Rekonstruktion gewonnene Schnittbilder oder aus diesen berechnete klassische Momente oder Zernike-Momente sein.

Fig. 3

**Beschreibung**

Ultraschallsensoren für Anwendungen in Luft bieten aufgrund ihres einfachen und kostengünstigen Meßprinzips, wegen ihrer unproblematischen Anwendbarkeit in industriellen Umgebungen und insbesondere wegen ihrer Fähigkeit, axiale Objektstrukturen, das sind Strukturen in Richtung vom Sensor zum Objekt aufzulösen, vielfältige Einsatzmöglichkeiten im Bereich der Robotik und der computergestützten Automation. Als Schlüsselkomponente in den immer komplexer werdenden Produktionsprozessen dienen sie als intelligente Sensoren zur Gewinnung von Umgebungs- und Zustandsinformationen, mit denen beispielsweise Werkstücke erkannt und deren Lage und etwaige Beschädigungen detektiert werden können. Dies ist letztendlich die Grundlage für eine Steigerung der Unabhängigkeit, der sogenannten "machine intelligence".

Stand der Technik

Für autonome und flexible Fertigungssysteme stellen die Erkennung und Lokalisierung von Werkstücken Aufgaben von großer Bedeutung dar. Leistungsfähige Ultraschallsensorsysteme zur Objekterkennung sollten in der Lage sein, Objekte möglichst unabhängig von ihrer Lage und Ausrichtung zu erkennen. Das von Ermert, H., Schmolke, J. , Weth, G., "An Adaptive Sensor for Objekt Identifikation," in IEEE Ultrasonics Symposium, Williamsburg, pp. 555-558, 1986 beschriebene System mit einem feststehenden Ultraschallwandlerpaar kann diese Bedingung nicht oder nur unter extremem Lern- und Klassifikationsaufwand erfüllen und eignet sich daher in erster Linie für Inspektionssysteme, bei denen eine exakte Positionierung der Objekte vorausgesetzt werden kann.

Zur Erfassung größerer Objektbereiche werden vorteilhafter Weise Anordnungen mit synthetischen Aperturen unter Anwendung holographischer Rekonstruktionsverfahren eingesetzt Lach, M. , Ermert, H., "Object recognition using an ultrasonic sensor System," in Acoustical Imaging, Bochum, Plenum Press, pp. 957-962, 1992. Die hier verwendeten Wandler mit schwacher Richtwirkung erlauben es, seitlich gestreute Signale zu erfassen. Spiegelnde Reflexionen treten hier weit weniger kritisch in Erscheinung, als dies bei Scan-Systemen mit scharf bündelnden Wandlern Vossiek, M., Eccardt, P.-C., Mágori, V. , Ermert, H., "Intelligente Signalverarbeitung durch Kombination von Fuzzy-Logik und Klassischer Signalvorverarbeitung am Beispiel eines Luftultraschallsystems zur Platinenbestückungskontrolle," in VDE-Fachtagung Technische Anwendungen von Fuzzy-Systemen, Dortmund, pp. 71-80, 12.-13. Nov. 1992 der Fall ist. Bei Verwendung mehrerer Ultraschallwandler besteht neben dem Vorteil einer schnelleren Signalaufnahme insbesondere die Möglichkeit eines weitaus umfassenderen Informationsgewinns als bei mechanisch bewegten Einzelwandlersystemen. Ein Mehrwandlersystem, welches Objekte in Kombination mit einem hochdimensionalen Neuronalen Netz rotations- und translationsunabhängig erkennt, wurde von Watanabe, S. , Yoneyama, M., "An Ultrasonic robot eye for object identification using neural network," in IEEE Ultrasonics symposium, Montréal, Canada, pp. 1083-1086, Oct. 1989 vorgestellt. Die reflektierten Signale einer von einem einzelnen feststehenden Wandler beschallten Objektszene werden hier mit einer 8x8 Empfangswandlermatrix detektiert. Die breitband-holographisch rekonstruierten dreidimensionalen Datensätze dienen direkt als Eingangsdaten für die anschließende Klassifikation. Nachteilig ist bei holographischen Verfahren, daß eine dreidimensionale Rekonstruktion extrem rechenaufwendig ist und auf den zur Zeit industriell verfügbaren Hardware-Plattformen kaum in Echtzeit realisiert werden kann. Zudem sind die Reflexionsbedingungen im Ausbreitungsmedium Luft, für holographische Verfahren eher ungünstig. Starke spiegelnde Reflexionen und große Dynamikunterschiede in den Echos führen dazu, daß größere ebene Objektstrukturen sehr schlecht rekonstruierbar sind.

Die Aufgabe der Erfindung ist es, ein Verfahren zur Objekterkennung anzugeben, bei dem die eventuell verschiedenen Höhen des zu erkennenden Objekts bestimmbar sind, bei dem die Messung störunempfindlicher erfolgt, beispielsweise der Einfluß der Luftfluktuation verringert wird, bei dem die Lage des Objekts bezüglich des Untergrunds eine geringere Bedeutung hat und bei dem der Rechenaufwand minimiert wird.

Die Aufgabe wird durch ein Verfahren gemäß dem Patentanspruch 1 gelöst.

Vorteilhafte Weiterbildungen der Erfindung ergeben sich aus den Unteransprüchen.

Das Verfahren gemäß den Unteransprüchen verbessert nochmals die Genauigkeit der Objekterkennung.

Das Verfahren gemäß dem Patentanspruch 2 erlaubt es zusätzlich die Größe der Flächen des Objekts zu bestimmen.

Das Verfahren gemäß den Patentansprüchen 12 - 15 erlaubt es zusätzlich die laterale Ausdehnung, die Position und die Drehlage des Objekts zu bestimmen.

Im folgenden wird die Erfindung anhand der Figuren näher erläutert.

Figur 1　　zeigt einen möglichen Aufbau eines Ultraschallmeßsystems für die Objekterkennung.

Figur 2　　zeigt eine mögliche Anordnung der Ultraschallwandler.

Figur 3　　zeigt die Geometrieverhältnisse bei der holographischen Rekonstruktion.

Figur 4        zeigt einen Schallübertragungsweg bei einer spiegelnden Reflexion und die Geometrieverhältnisse, die dem vereinfachten Rekonstruktionsansatz zugrunde liegen.

Figur 5a        zeigt das Summen- und Maximum-Profil einer mit dem vereinfachten Rekonstruktionsansatz rekonstruierten Stufe.

Figur 5b        zeigt das Summen- und Maximum-Profil einer, breitbandholographisch rekonstruierten Stufe (Kombination aller holographisch rekonstruierten Scans senkrecht zur Referenzebene, also die z'-Richtung in Fig. 4).

Figur 5c        zeigt das Summen- und Maximum-Profil eines mit dem vereinfachten Rekonstruktionsansatz rekonstruierten, auf dem Untergrund am äußersten Rand des Erfassungsbereichs liegenden Zylinders.

Figur 5d        zeigt das Summen-Profil einer mit dem vereinfachten Rekonstruktionsansatz rekonstruierten Stufe ohne Untergrundecho-Unterdrückung.

Figur 5e        zeigt das Summen-Profil einer mit dem vereinfachten Rekonstruktionsansatz rekonstruierten Stufe mit Untergrundecho-Unterdrückung, wie in Fig. 5a.

Figur 6a        zeigt das breitbandholographisch rekonstruierte Schnittbild der Hauptreflexionsebene eines aufrecht auf dem Untergrund stehenden Zylinders mit den Abmessungen $\varnothing$ 3 mm x 5 mm, mit Untergrundecho-Unterdrückung.

Figur 6b        zeigt das breitbandholographisch rekonstruierte Schnittbild der Hauptreflexionsebene eines aufrecht auf dem Untergrund stehenden Zylinders mit den Abmessungen $\varnothing$ 3 mm x 5 mm, ohne Untergrundecho-Unterdrückung.

Figur 6c        zeigt das breitbandholographisch rekonstruierte Schnittbild der Hauptreflexionsebene einer flach auf dem Untergrund liegenden Mutter M6, Ergebnis der kompletten Bildverarbeitung.

Figur 6d        zeigt das breitbandholographisch rekonstruierte Schnittbild der Hauptreflexionsebene eines flach auf dem Untergrund liegenden Quaders 15 x 2 x 2 mm³, Ergebnis der kompletten Bildverarbeitung.

Aufbau des Meßsystems

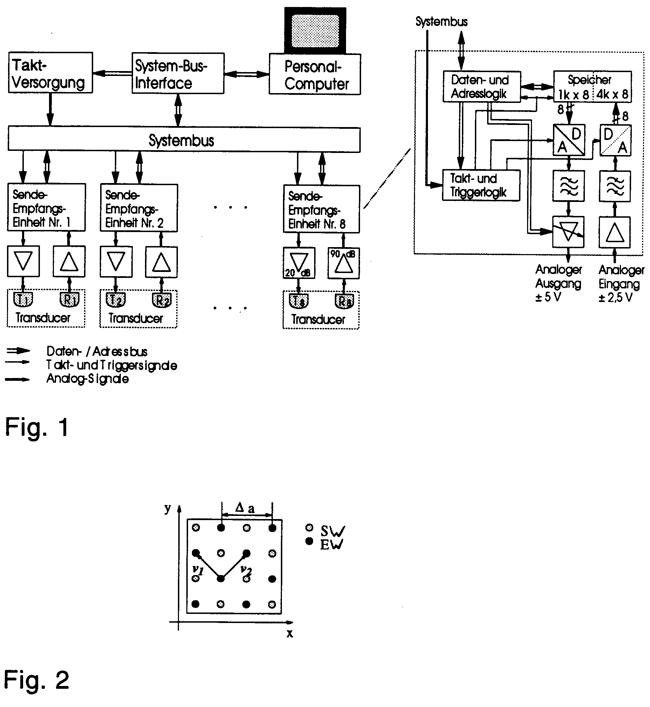

Den grundlegenden Aufbau des Meßsystems zeigt Figur 1. Das Kernstück der Meßanordnung bilden acht separate Sende- und Empfangseinheiten. Jede Sende- und Empfangseinheit besitzt neben einem 8-Bit Digital/Analog- und Analog/Digital-Konverter mit dem zugehörigen Speicher für die Sende- und Empfangssignale eine leistungsfähige Timer- und Triggerlogik zur Steuerung der Datenaufnahme. Alle Einheiten sind an ein Bussystem gekoppelt, das über eine speziell entwickelte Schnittstelle direkt mit dem Bussystem des Steuerrechners verbunden ist. Der Personal-Computer dient neben der Steuerung des Meßablaufes zur Auswertung der Meßsignale.

Das System arbeitet mit 8 breitbandigen PVDF (Polyvinylidenefluoride) Ultraschall Sende- Empfangswandlerpaaren, wie sie in Manthey, W., Kroemer, N. , Mágori, V., "Ultrasonic transducers and transducer arrays for application in air," Meas. Sci. Technol., Vol. 3(3), pp. 249-261, 1992 beschrieben sind. Die Wandler sind matrixförmig auf einer Fläche von 21 x 21 mm² angeordnet, vergleiche Figur 2. Die Mittenfrequenz der Wandler beträgt 210 kHz, ihre absolute Bandbreite 200 kHz und der Öffnungswinkel ca. 15°. Die Sendewandler werden sequentiell mit linear frequenzmodulierten Signalen, sogenannten Chirps, angeregt. Alle 64 Übertragungswege werden getrennt aufgezeichnet. Zur Pulskompression und zur Kompensation der Systemübertragungseigenschaften werden die Empfangssignale invers gefiltert. Eine initialisierende Referenzmessung zum ebenen Untergrund, auf dem sonst die Objekte liegen, dient neben der Bestimmung der Übertragungsfunktionen auch zur Bestimmung der relativen Lage der Referenzebene zur Sensorebene.

Wie in Figur 2 zu erkennen ist, können das räumliche Abtastschema und die Positionen $a_{ti}$ der Sendewandler SW und die Positionen $a_{rk}$ der Empfangswandler EW, durch die Abtastmatrix $V$ ausgedrückt werden:

$$a_{ti} = a_{t0} + V \cdot (n_1, n_2)^T,$$

$$a_{rk} = a_{r0} + V \cdot (n_1, n_2)^T,$$

und

$$V = (v_1 | v_2) = \frac{\Delta a}{\sqrt{2}} \begin{pmatrix} 1 & 1 \\ 1 & -1 \end{pmatrix} \qquad (1)$$

wobei

$n_1, n_2 = 0, 1, 2, \ldots 7$

t = transmission

r = recieve

i = Index Sendewandler

k = Index Empfangswandler

Ist das empfangene Wellenfeld auf die Ortsgrenzfrequenz $\Omega_{max}$, beschränkt, so ist es möglich, die Feldverteilung exakt aus den Abtastpunkten zurückzugewinnen, falls das zweidimensionale Abtasttheorem, wie es von Dudgeon, D.E. , Mersereau, R.M., Multidimensional Digital Signal Processing. Prentice-Hall Signal Processing Series, ed. A.V. Oppenheim, Englewood Cliffs, New Jersey: Prentice-Hall, Inc., 1984 beschrieben wird, erfüllt ist. Für die vorliegende Anordnung ist zu fordern:

$$\Delta a < \frac{\sqrt{2} \cdot c \cdot \pi}{\Omega_{max}} \qquad (2)$$

wobei

$\Delta a$ = Abstand zweier Ultraschallwandler

c = Schallgeschwindigkeit in Luft

$\Omega_{max}$ = Ortsfrequenz

Die maximal vorkommende Ortsfrequenz $\Omega_{max}$ wird sowohl durch die maximale Signalfrequenz als auch durch den minimalen Elevationswinkel $\Phi_{min}$ von der Apertur zu einem beliebigen Objektpunkt festgelegt.

$$\Omega_{max} = 2 \cdot \pi \cdot f_{max} \cdot \cos(\Phi_{min}) \qquad (3)$$

wobei

$f_{max}$ = Signalfrequenz

Wird das Objekt von nur einem Wandler beschallt, so ist es nicht möglich, die zweidimensionale Abtastbedingung (2) unter Berücksichtigung der aktuellen Wandlerparameter zu erfüllen, da hierzu der Abstand $\Delta a$ zwischen den Wandlern kleiner sein müßte als ihre Abmessungen ($\Delta a < 3$ mm). Falls aber mehrere Sendewandler SW das Objekt Obj sequentiell von unterschiedlichen Aperturpositionen aus beschallen, so wird das Feld jedes Punktstreuers auf der Objektoberfläche mit einer für jeden Wandler unterschiedlichen Phasenbedingung abgetastet. Die zusätzlichen Abtastpunkte sind nicht äquidistant verteilt, und ihr Abstand ist für jeden Objektpunkt unterschiedlich. Durch Verwendung eines geeigneten Rekonstruktionsalgorithmus ist es dennoch möglich, die zusätzliche Information vorteilhaft zu nutzen.

Wie in Untersuchungen gezeigt werden konnte, treten auch bei einem Wandlerabstand von $\Delta a = 14$ mm keine nennenswerten Aliasing-Effekte in den rekonstruierten Bildfunktionen auf.

Es ist offensichtlich, daß das beschriebene Aufnahme- und Abtastschema deutliche Vorzüge gegenüber einem System mit nur einem Sendewandler und einer Empfangswandlermatrix, sowie gegenüber einem mechanischen Scansystem aufweist. Es ist hiernit möglich, mit relativ wenigen Ultraschallwandlern und Meßpositionen größere Objektbereiche zu erfassen und einen optimalen Informationsgewinn zu erzielen.

Rekonstruktion der Objekteigenschaften

Breitbandholographie

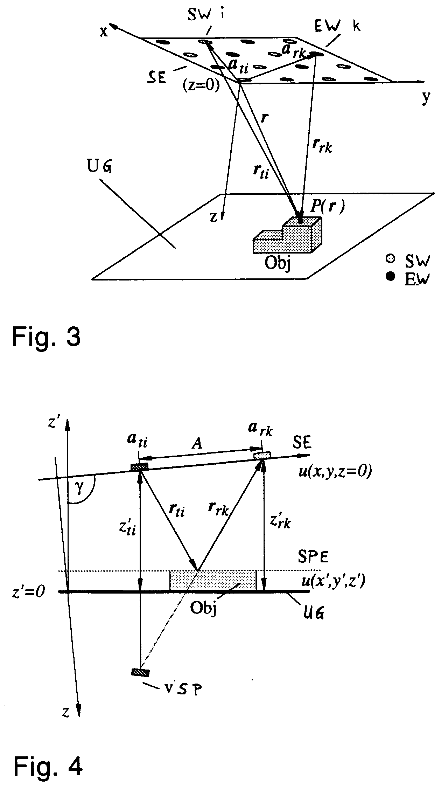

Einen Übertragungsweg von einem Sendewandler SW mit dem Index i an der Position $a_{ti}$ zu einem Punktstreuer $P(r)$ und zurück zu einem Empfangswandler EW mit dem Index k, positioniert in $a_{rk}$, zeigt Figur 3. Basierend auf dem bekannten breitbandholographischen Rekonstruktionsprinzip kann eine Bildfunktion in der Form:

$$I(x,y,z) = \left| \sum_i \sum_k f_{R_{ik}}(t = \tau_{ik}) \right| \qquad (4)$$

wobei

I = Bildfunktion

x, y, z = kartesische Koordinaten

r = Vektor, Position des Sendekörpers r = (x, y, z)

$f_{Rik}$ = Empfangssignal vom Sender i zu Empfänger k

angegeben werden. Bei bekannter Schallgeschwindigkeit berechnet sich die Laufzeit $\tau_{ik}$ vom Sendewandler SW mit Index i zu einem fiktiven Punktstreuer an der Position $r = (x,y,z)^T$ und zurück zum Empfangswandler EW mit Index k zu:

$$\tau_{ik} = \frac{|r_{ti}| + |r_{rk}|}{c} = \frac{R_{ik}}{c} \qquad (5)$$

$$R_{ik} = \sqrt{(x - x_{ti})^2 + (y - y_{ti})^2 + z^2} + \sqrt{(x - x_{rk})^2 + (y - y_{rk})^2 + z^2}$$

wobei

$R_{ik}$ = Betrag (Strecke) des Schallaufwegs vom Sender i
zum Empfänger k
$r_{ti}$ = Abstand zwischen dem Sendewandler SW mit Index i
und dem Objektreflexionspunkt
$r_{rk}$ = Abstand zwischen dem Objektreflexionspunkt und dem
Empfangswandler EW mit Index k

Formel 4 beschreibt die laufzeitrichtige Summation der empfangenen und anschließend invers gefilterten analytischen Signale (erweitert mit ihrem Imaginärteil) über alle Sende- und Empfangspositionen.

Falls sich tatsächlich ein Streuzentrum an der Position **r** befindet, werden dessen Echos laufzeitrichtig und kohärent aufsummiert, was in Folge zu einer großen Bildamplitude führt. Demgegenüber werden Echos von Streukörpern, die sich nicht an der Position **r** befinden, inkohärent überlagert. Um sicher sein zu können, daß eine inkohärente Überlagerung mehrerer Echosignale zu einer kleinen Amplitude führt, ist allerdings zu fordern, daß viele Meßpunkte und viele, in etwa gleichmäßig verteilte Streukörper mit vergleichbarer Reflektivität vorhanden sind. Eine derartige Reflexionsbedingung ist bei Luftultraschallmessungen an Werkstücken aber sehr untypisch. Vielmehr setzen sich übliche Werkstücke aus größeren ebenen Oberflächen zusammen. Starke spiegelnde Reflexionen bedingen, daß der empfangene Meßdatensatz nur sehr wenige Echos beinhaltet. Aus diesem Grund ist es möglich, daß auch eine inkohärente Summation zu Störbildern führt, die eine vergleichbare Intensität aufweisen können wie das echte Objektmuster. Die Begrenzung von spektraler Bandbreite und Systemdynamik verstärken dieses Problem. Mit holographischen Verfahren ist es unter den dargestellten Bedingungen insbesondere nicht möglich, axiale Strukturen so genau aufzulösen und Entfernungen so exakt zu bestimmen, wie dies mit einfachen, konventionellen Ultraschalldistanzsensoren üblich ist.

Ein vereinfachter Rekonstruktionsansatz

Um axiale Objektstrukturen auf einfache Weise auflösen zu können, ist es möglich genau jene Reflexionsbedingungen auszunutzen, die eine breitbandholographische Rekonstruktion behindern. Folgende Meßbedingungen, die typisch für Luftultraschallabbildungen von üblichen Werkstücken sind, sollen im weiteren vorausgesetzt werden:

- Die Objekte liegen auf einem ebenen Untergrund, dessen relative Position zu den Sensoren, beispielsweise aus einer Referenzmessung, bekannt ist.

- Die Menge der vorkommenden Objekte ist bekannt und beschränkt.

- Typische Werkstücke besitzen in aller Regel eine relativ einfache Geometrie, wie zum Beispiel Symmetrieeigenschaften, einen rechtwinkligen Aufbau oder parallele Teiloberflächen, und zumindest eine Kante, die länger ist als einige Wellenlängen und zum Untergrund parallel liegt (wie bei Quadern, Hexaedern, Zylindern, Ringen, Kreisscheiben etc.).

Unter diesen Bedingungen wird ein Großteil der Energie die von der Sensor Matrix detektiert wird, durch spiegelnde Reflexionen hervorgerufen. Seitliche Reflexionen weisen demgegenüber eine sehr viel kleinere Amplitude auf oder sind wegen der begrenzten Aperturfläche nicht detektierbar. Folglich ist es zur Rekonstruktion axialer Objektstrukturen hinreichend, nur die Schallwege zu berücksichtigen, die zu spiegelnden Reflexionen gehören. Basierend auf der Sensorgeometrie, wie sie in Figur 4 dargestellt ist, wobei in der Figur mit vSP die virtuelle Spiegelschallquelle, mit SPE die Spiegelebene und mit SE die Sensorebene bezeichnet wird, läßt sich nun die folgende Rekonstruktionsvorschrift angeben:

$$\tilde{f}_{R_{ik}}(z') = f_{R_{ik}}(t = \tilde{\tau}_{ik}) \tag{6}$$

Da bei Reflexionen an einer schallharten Fläche der Einfallswinkel der Welle dem Ausfallswinkel entspricht, läßt sich die Laufzeit eines Schallsignals, das in der Ebene in der Höhe z' gespiegelt wird, anhand einfacher geometrischer Überlegungen berechnen.

$$\tilde{\tau}_{ik} = \frac{|r_{ti}| + |r_{rk}|}{c} = \frac{R_{ik}}{c} \tag{7}$$

$$R_{ik} = \sqrt{A^2 + 4 \cdot (z'_{ti} - z')^2 - 4 \cdot A \cdot (z'_{ti} - z') \cdot \cos\gamma}$$

$$A = \sqrt{(x_{ti} - x_{rk})^2 + (y_{ti} - y_{rk})^2}$$

wobei

$\gamma$ = Winkel zwischen der Sensorebene und der z'-Achse

A = Abstand zwischen zwei Ultraschallwandlern

Die Distanz der Wandler zur Referenzebene, auch als Untergrund UG bezeichnet ($z'_{ti}$ und $z'_{rk}$) und der Neigungswinkel $\gamma$ der Sensorebene SE sind aus der Referenzmessung zum ebenen Untergrund UG bekannt.

Die Signale werden auf diese Weise auf eine gemeinsame Zeit- oder Höhenachse projiziert. Die entzerrten Signale sind vergleichbar mit Echosignalen, die sich bei einer senkrecht zum Untergrund UG ausgerichteten Meßrichtung (Einzelwandler im Sende/Empfangsbetrieb senkrecht über dem Untergrund UG ) ergeben würden. Die entzerrten Signale können somit unmittelbar zur Bestimmung der Höhen der Objektstrukturen herangezogen werden. Ebenso wäre es möglich, weitere Merkmale dieser Signale, wie die Formen oder die Amplituden der Echos zur Beschreibung des Objekts Obj oder zur Lagebestimmung zu benutzen.

Summiert man die Hüllkurven aller entzerrten Empfangssignale auf, so ergibt sich ein Reflexionsprofil, das genaue Informationen über Höhe und Reflektivität der zum Untergrund UG parallelen Objektstrukturen enthält. Das Profil ist zudem unabhängig von Translationen und Rotationen des Objektes Obj.

$$P_{sum}(z') = \sum_i \sum_k \left| \tilde{f}_{R_{ik}}(z') \right| \tag{8}$$

$P_{sum}$ = Summenprofil oder auch als Summensignal bezeichnet

Um weitere Informationen abzuleiten, werden die entzerrten Empfangssignale zusätzlich mit einer Maximum-Operation verknüpft:

$$P_{max}(z') = \bigvee_i \bigvee_k \left| \tilde{f}_{R_{ik}}(z') \right| \tag{9}$$

$P_{max}$ = Maximumprofil oder auch als Maximumsignal bezeichnet

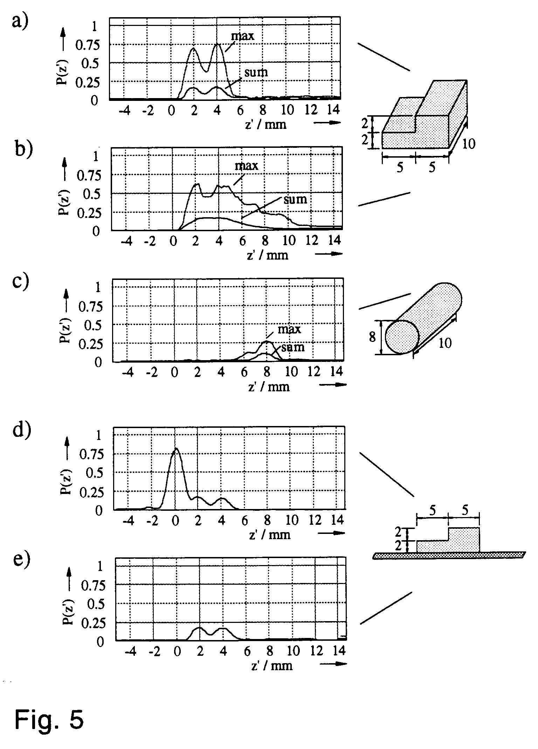

Durch den Vergleich des Maximumprofils mit dem Summenprofil können Aussagen über die Geometrie der Objektoberfläche gewonnen werden. Wegen der starken Richtwirkung führt beispielsweise ein flaches Objekt (z.B. ein Quader, vgl. Fig. 5a) zu einer, bezogen auf das Maximumprofil, kleineren Amplitude im Summenprofil als ein gewölbtes Objekt (z.B. ein Zylinder, vgl. Fig. 5c). In Figur 5a wird ferner die ausgezeichnete axiale Auflösung des vereinfachten Rekonstruktionsansatzes deutlich. Demgegenüber zeigt Figur 5b die Probleme bei der axialen Auflösung größerer ebener Objektstrukturen mit Hilfe einer holographischen Rekonstruktion. Der Zylinder, dessen Reflexionsprofil in Figur 5c zu sehen ist, liegt am äußersten Rand des Erfassungsbereiches der Sensormatrix. Wegen der gewölbten Oberfläche sind deutliche Seitenreflexionen zu erwarten. Wie ersichtlich ist, wird aber auch bei diesen äußerst ungünstigen Meßbedingung nur das Maximum Profil leicht durch Reflexionswege mit einer etwas längeren Laufzeit verzerrt.

Aufgrund der guten axialen Auflösung eignet sich das Konzept der Berechnung von Summenprofilen auch in besonderer Weise für hochpräzise Distanzsensoren. Die Kombination der Signale mehrerer räumlich verteilter Meßwege führt dazu, daß das vorgeschlagene Meß- und Auswerteprinzip sehr unempfindlich gegenüber äußeren Störungen ist. Sowohl externe akustische Störgeräusche als auch Phasenschwankungen aufgrund von Luftturbulenzen werden sehr effektiv unterdrückt. Wie Untersuchungen zeigten, führen auch extreme Luftturbulenzen kaum zu einer Beeinträchtigung des Summenprofils, was darauf zurückzuführen ist, daß die Störungen in den Meßsignalen aufgrund der räumlichen Verteilung der Schallübertragungswege nicht oder nur sehr schwach korreliert sind. Ist die Entfernung von der Sensorebene zum Objekt sehr viel größer als der Abstand zwischen den Ultraschallwandlern, so kann die Bedingung ebener und parallel ausgerichteter Objektoberflächen vernachlässigt werden.

Anzumerken ist, daß vor der eigentlichen Rekonstruktion die Echos des Untergrundes unterdrückt werden. So sind die Untergrundechos in den Profilen der Figur 5a, b, c und e nicht mehr vorhanden. Dies ist relativ einfach möglich, da Form und Lage der Untergrundechos aus der Referenzmessung bekannt sind. Die Untergrundecho-Unterdrückung gliedert sich in folgende Schritte:

1) Referenzmessung:
Aufnehmen und Speichern der Echos des ebenen Untergrundes (ohne Objekt)

2) Messung mit dem Objekt:
Bestimmung der Lage und der Amplitude des größten Maximums in der Umgebung der Position (halbe Wellenlänge links und rechts) des in der Referenzmessung bestimmten Maximums.

3) Subtraktion des auf die aktuelle Amplitude normierten und zur aktuellen Position verschobenen Referenzechos vom Empfangssignal

Aufgrund der Annahme, daß die mit dem vereinfachten Rekonstruktionsansatz entzerrten Echos zu größeren ebenen Objektstrukturen gehören, ist es nicht möglich, sie zur Auflösung von lateralen Strukturen heranzuziehen. Die Reflexionsprofile können aber dazu benutzt werden, die Objektebenen zu bestimmen, in denen sich nennenswerte reflektierende Strukturen befinden. Wird nur für diese interessierenden Objektebenen eine holographische Rekonstruktion durchgeführt, so ist es möglich, eine rechenaufwendige dreidimensionale Rekonstruktion zu umgehen, ohne einen merklichen Informationsverlust in Kauf nehmen zu müssen. Da typische Werkstücke zumeist nur sehr wenigen Hauptebenen aufweisen, erlaubt diese Vorgehensweise eine sehr umfassende Objektbeschreibung bei einer außerordentlichen Reduzierung des Rechenaufwandes.

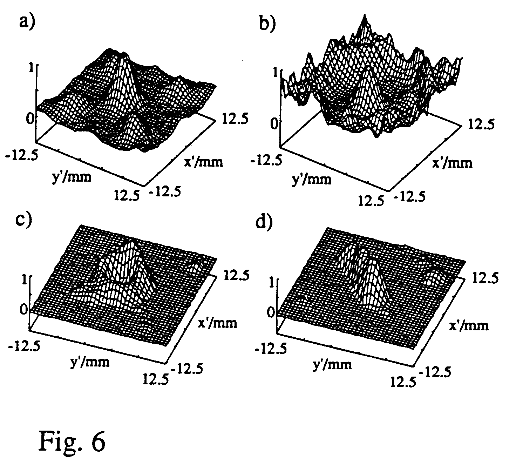

Figur 6 zeigt einige Schnittbilder der Hauptreflexionsebenen typischer Werkstücke. Das Bild des Zylinders in Figur 6a korrespondiert mit der Punktbildfunktion des Systems. Es ist ersichtlich, daß die laterale Auflösung (6-dB Breite der Punktbildfunktion) unter den gegebenen Bedingungen etwa 5 mm beträgt. Die Nebenmaxima in der Bildfunktion werden durch die begrenzte Größe der Sensormatrix hervorgerufen.

In Figur 6b ist derselbe Zylinder wie in Figur 6a abgebildet, nur daß hier die Untergrundechos nicht kompensiert wurden. Es wird wiederum deutlich, wie starke Echos von tieferliegenden Reflektoren das Bildergebnis in einer höher liegenden Ebene stören. Störungen durch tiefer liegende Objektstrukturen können bei der beschriebenen Anwendung toleriert werden, da keine Bildgebung angestrebt wird und diese Störungen charakteristisch für ein Objekt sind. Die Untergrundecho-Unterdrückung erlaubt es zudem, die erste Hauptreflexionsebene des Objektes nahezu störungsfrei zu rekonstruieren.

Vor der Klassifikation der Schnittbilder werden diese normiert, mit einem Moving-Average-Filter geglättet und einer Schwellenwertoperation unterzogen. Ergebnisse dieser Bildverarbeitungsschritte sind in den Abbildungen zweier Werkstücke, Mutter M6 in Figur 6c und Quader 15x2x2 mm$^3$ in Figur 6d, zu erkennen.

Ebenso ist es möglich, die laterale Objektstruktur mit einem optische System, wie einer Kamera, aufzunehmen. Hierbei ist die Kamera, genau wie die Ulraschallsensorgruppe, senkrecht über der Referenzebene anzubringen. Die so gewonnene Draufsicht des Objekts kann sehr gut zur Bestimmung der lateralen Objektabmessungen, sowie zur Detktion von Position und Drehlage herangezogen werden, genau so wie im folgenden für die Ultraschallbilder beschrieben. Es ist hier eine deutlich bessere laterale Auflösung zu erwarten als dies mit Ultraschallsystemen möglich ist.

Ferner ist bei der Objektbeschreibung eine Kombination der, in der Ultaschallmessung bestimmen Summenprofile, mit dem optisch aufgenommenen Bild der Draufsicht für eine praktische Anwendung äußerst günstig. Hierbei könnnen die gute axiale Auflösung von Ultraschallsystemen mit der guten lateralen Auflösung von Kamerasystemen kombiniert werden, um so sehr genau auf die dreidimensionale Ausdehnung und die Lage der Objekte schließen zu können und um eine ausgezeichnete Objektselektivität zu gewährleisten.

## Merkmalsextraktion

Merkmale der entzerrten Signale oder der beiden Reflexionsprofile, also des Summenprofils und des Maximumprofils, wie ihr Mittelwert, ihr Schwerpunkt oder die Lage und Höhe ihrer Maxima können direkt zur lageunabhängigen Klassifikation herangezogen werden.

Die Klassifikation der Schnittbilder ist demgegenüber aufwendiger. Eine günstige Vorgehensweise, bei der aufwendige Klassifikatoren vermieden werden, besteht darin, aus den Schnittbildern wenige lageunabhängige Merkmale zu extrahieren, die eine genaue Bildbeschreibung erlauben. Bezüglich der Lage und der Orientierung des Objekts invariante Momente, basierend auf klassischen Momenten oder Zernike Momenten, können hierzu verwendet werden.

## Zernike Momente

Zernike Momente $A_{nm}$ projizieren die digitale Bildfunktion $I(x',y')$ auf einen orthogonalen Satz von Polynomen, wobei diese Polynome innerhalb des Einheitskreises $x'^2+y'^2 \leq 1$ definiert sind:

$$A_{nm} = \frac{n+1}{\pi} \sum_x \sum_y I(x',y') \cdot [V_{nm}(x',y')]^* \qquad (10)$$

Die Form der Zernike-Polynome $V_{nm}(x', y')$ lautet:

$$V_{nm}(x',y') = V_{nm}(\rho, \theta) = R_{nm}(\rho) \cdot e^{jm\theta} \qquad (11)$$

mit

n:        positiver ganzzahliger Index oder Null

m: ganze Zahl, n-|m| gerade und |m|< n

ρ: Länge des Vektors vom Ursprung zum Bildpixel (x',y')

θ: Winkel zwischen dem Vektor ρ und der x'-Achse

$R_{nm}(ρ)$: Das Radial-Polynom welches wie folgt definiert ist

$$R_{nm}(ρ) = \sum_{s=0}^{(n-|m|)/2} \frac{(-1)^s \cdot ρ^{n-2s} \cdot (n-s)!}{s!\left(\frac{n+|m|}{2}-s\right)!\left(\frac{n-|m|}{2}-s\right)!}$$

Um die Zernike Momente $A_{nm}$ eines Schnittbildes zu berechnen, wird dessen Mittelpunkt (Schwerpunkt) bestimmt und das Bild um diesen Schwerpunkt in den Bereich des Einheitskreises projiziert. Alle Punkte, die innerhalb des Einheitskreises liegen, werden zur Berechnung der Zernike Momente $A_{nm}$ herangezogen. Der Mittelpunkt der Bildfunktion I(x', y') läßt sich anhand klassischer Momente $m_{pq}$ bestimmen:

$$m_{pq} = \sum_x \sum_y x'^p \cdot y'^q \cdot I(x',y'), \tag{12}$$

wobei

$$x'_s = m_{10}/m_{00} \text{ und } y'_s = m_{01}/m_{00} \tag{13}$$

p, q = positive ganze Zahl oder Null den Schwerpunkt des Bildes bezeichnen.

Aufgrund der Verschiebung um den Schwerpunkt sind die Eingangsmuster zur Berechnung der Zernike-Momente $A_{nm}$ unabhängig von der Objektlage. Der so berechnete Schwerpunkt eignet sich zudem zur Bestimmung der lateralen Objektposition.

Darüber hinaus kann der Drehwinkel des Objektes durch klassische Momente höherer Ordnung bestimmt werden, was zur Handhabung der Objekte von Bedeutung sein kann.

Die Vorzüge der Zernike-Momente $A_{nm}$ bestehen darin, daß ihre Beträge $|A_{nm}|$ nicht von der Ausrichtung des Musters abhängig sind. Hervorzuheben ist ferner ihre Orthogonalität, die es erlaubt, ein Muster sehr umfassend mit nur wenigen Momenten zu beschreiben.

Unter Berücksichtigung der Auflösung des Systems und seinem Signal-zu-Rauschverhältnis ist es ausreichend, ein Schnittbild mit nur 7 Momenten (bis zur 4. Ordnung) zu beschreiben.

Klassifikation mit einem Neuronalen Netz

Wie schon angeführt wurde, handelt es sich bei den Merkmalen der Reflexionsprofile um sehr exakte Größen, die direkt mit Objekteigenschaften, wie der Höhe oder Größe der reflektierenden Fläche verknüpft sind. Folglich ist es möglich, diese Merkmale mit einfachen abstandsmessenden Klassifikatoren oder mit statistischen Klassifikatoren zu analysieren.

Die Klassifikation der Zernike Momente ist jedoch deutlich anspruchsvoller. Zum einen unterliegen die Bildfunktionen generell gewissen Schwankungen, die beispielsweise durch schwache Phasemodulationen in den Empfangssignalen infolge von Luftbewegungen hervorgerufen werden. Ferner bedingt die begrenzte Bildfläche, daß Nebenmaxima des eigentlichen Objektmusters, je nach Position des Objektes, innerhalb oder außerhalb des Bildbereiches liegen können. Die unterschiedlichen resultierenden Zernike Momente sind zwar immer noch charakteristisch für ein Objekt, jedoch ist ein Klassifikator mit der Fähigkeit zur Verallgemeinerung erforderlich.

Da Neuronale Netze sowohl in der Lage sind, zu generalisieren und assoziativ zuzuordnen, als auch Funktionen von abstandsmessenden Klassifikatoren, wie "k-nearest-neighbor Klassifikatoren", übernehmen können, sind sie für die angestrebte Klassifikationsaufgabe sehr gut geeignet. Ein weiterer Vorteil von Neuronalen Netzen ist ihre Lernfähigkeit.

Zur Erkennung der Objekte wurde ein einfaches, dreilagiges Perzeptron-Netzwerk eingesetzt, welches mit Hilfe des Backpropagation-Algorithmus trainiert wird. Das Netzwerk besteht aus 26 Eingangsknoten, denen jeweils ein Merkmal zugeordnet ist, 15 zwischenliegenden Knoten und 25 Ausgangsknoten. Jeder der Ausgabeknoten repräsentiert ein Objekt. Die Klassifikation stützt sich auf die Merkmale der beiden Objektebenen, welche die größte Signalenergie reflektieren. Es werden also 14 Zernike Momente und 12 Merkmale der Reflexionsprofile herangezogen.

Das System wurde mit einem Satz von 25 typischen Werkstücken getestet mit Muttern M4 bis M6, liegend und aufrecht stehend und Sechsecke mit der selben Größe, liegend, Unterlegscheiben M4 bis M6, Zylinder, Quader und Stufen im Größenbereich von 2 mm bis 15 mm. Das Neuronale Netz wurde mit den Daten von 250 Beispielmessungen (10 Positionen für jedes Objekt) trainiert. Im Anschluß an die Trainingsphase wurden 2500 Messungen durchgeführt und die Klassifikationsergebnisse bewertet. Jedes Objekt wurde dem System auf 100 über den gesamten Erfassungs-bereich (25x25 mm$^2$) verteilten Positionen dargeboten. Trotz der teilweise sehr ähnlichen Reflexionseigenschaften der Objekte war das System in der Lage, die Werkstücke unabhängig von ihrer Position und Ausrichtung mit einer Erkennungssicherheit von über 99 % zu identifizieren. Die gesamte Signalaufnahme und Klassifikation dauert auf einem konventionellen Personal Computer nur wenige Sekunden und kann auf einer leistungsfähigeren Hardwareplattform, zum Beispiel einem Signalprozessorsystem in Echtzeit umgesetzt werden.

Unterlegscheiben M4 und M5 unterscheiden sich in ihrer Höhe nur um 0,1 mm und in der Fläche um ca. 25 mm$^2$. Die lateralen Strukturunterschiede liegen deutlich unterhalb der Auflösungsgrenze der holographischen Rekonstruktion. Ferner sind die Unterlegscheiben leicht gewölbt, so daß je nach der Seite auf der sie liegen, ein Fokussierungs- oder Defokussierungseffekt auftritt, wodurch die Amplituden in den Reflexionsprofilen eine gewisse Schwankungsbreite aufweisen. Trotz der geringen geometrischen Unterschiede werden Unterlegscheiben M5 mit goßer Sicherheit von Unterlegscheiben M4 unterschieden.

**Patentansprüche**

1. Verfahren zur Objekterkennung,

    1.1 bei dem eine Gruppe von Ultraschallwandlern in Sendewandler und Empfangswandler aufgeteilt wird,
    1.2 bei dem einer der Sendewandler ein Signal aussendet,
    1.3 bei dem die Empfangswandler das am Objekt oder am Untergrund reflektierte Signal empfangen,
    1.4 bei dem ein anderer der Sendewandler ein Signal aussendet,
    1.5 bei dem die Empfangswandler das am Objekt oder am Untergrund reflektierte Signal empfangen,
    1.6 bei dem die Schritte 1.4 und 1.5 so oft wiederholt werden, bis jeder der Sendewandler wenigstens einmal ein Signal ausgesendet hat,
    1.7 bei dem jedes empfangene Signal ($f_{Rik}$) entzerrt wird, indem für jede beliebige Höhe (z') die Laufzeit ($\tilde{\tau}_{ik}$) berechnet wird, die das Signal bei einer spiegelnden Reflexion vom Sendewandler zum Objekt und zurück zum Empfangswandler benötigen darf,
    in dem zu der berechneten Laufzeit ($\tilde{\tau}_{ik}$) die korrespondierende Amplitude aus dem empfangenen Signal ($f_{Rik}$) bestimmt wird, und
    in dem die Höhen (z') und die Amplituden das entzerrte Signal ($\tilde{f}_{Rik}$) darstellen,
    1.8 bei dem den entzerrten Signalen wenigstens ein Merkmal entnommen wird, das mit gespeicherten Merkmalen verglichen wird.

2. Verfahren nach Anspruch 1,

    2.1 bei dem aus den entzerrten Signalen ein Summensignal gebildet wird,
    2.2 bei dem die Zeitpunkte des Auftretens der Maxima im Summensignal bestimmt werden, welche Maße für die Höhen des Objekts und ein Merkmal zur Erkennung des Objekts sind.

3. Verfahren nach Anspruch 1,
    bei dem die Zeitpunkte des Auftretens der Maxima in den entzerrten Signalen bestimmt werden, welche Maße für die Höhen des Objekts und ein Merkmal zur Erkennung des Objekts sind.

4. Verfahren nach Anspruch 2 oder 3,
    bei dem die Amplituden der Maxima bestimmt werden, welche ein weiteres Merkmal zur Erkennung des Objekts sind.

5. Verfahren nach einem der Ansprüche 2 - 4,
    bei dem die Signalenergie des Summensignals bestimmt wird, welche ein weiteres Merkmal zur Erkennung des Objekts ist.

6. Verfahren nach einem der Ansprüche 2 - 5,
    bei dem der Schwerpunkt des Summensignals bestimmt wird, welcher ein weiteres Merkmal zur Erkennung des Objekts ist.

7. Verfahren nach einem der Ansprüche 1 bis 6,

- bei dem mittels einer Oder-Verknüpfung der entzerrten Signale ein Maximumsignal gebildet wird,
- bei dem die Zeitpunkte des Auftretens der Maxima im Maximumsignal bestimmt werden, welche ein weiteres Merkmal zur Erkennung des Objekts sind.

8. Verfahren nach Anspruch 7,
bei dem die Amplituden der Maxima bestimmt werden, welche ein weiteres Merkmal zur Erkennung des Objekts sind.

9. Verfahren nach Anspruch 7 oder 8,
bei dem die Signalenergie des Maximumsignals bestimmt wird, welche ein weiteres Merkmal zur Erkennung des Objekts ist.

10. Verfahren nach einem der Ansprüche 7 bis 9,
bei dem der Schwerpunkt des Maximumsignals besitmmt wird, welcher ein weiteres Merkmal zur Erkennung des Objekts ist.

11. Verfahren nach einem der Ansprüche 7 - 10,
bei dem ein Bezug zwischen dem Maximumsignal und dem Summensignal geschaffen wird, welcher ein weiteres Merkmal zur Erkennung des Objekts ist.

12. Verfahren nach einem der Ansprüche 1 bis 11,
bei dem den ermittelten Hohen Ebenen zugewiesen werden, für die jeweils ein holographisches Schnittbild erzeugt wird, das ein weiteres Merkmal zur Erkennung des Objekts ist.

13. Verfahren nach einem der Ansprüche 1 bis 11,
bei dem den ermittelten Hohen Ebenen zugewiesen werden, für die jeweils ein holographisches Schnittbild erzeugt wird, bei dem, das jeweilige Schnittbild beschreibende Zernike-Momente ($A_{nm}$) bestimmt werden, die ein weiteres Merkmal zur Erkennung des Objekts sind.

14. Verfahren nach einem der Ansprüche 1 bis 11,
bei dem mittels eines optischen Systems ein Bild einer Ansicht des Objekts erzeugt wird, das ein weiteres Merkmal zur Erkennung des Objekts ist.

15. Verfahren nach einem der Ansprüche 1 bis 11,
bei dem mittels eines optischen Systems ein Bild einer Ansicht des Objekts erzeugt wird, das ein weiteres Merkmal zur Erkennung des Objekts ist,
bei dem, das Bild beschreibende Zernike-Momente ($A_{nm}$) bestimmt werden, die ein weiteres Merkmal zur Erkennung des Objekts sind.

16. Verfahren nach einem der Ansprüche 1 - 15,
bei dem der Vergleich mittels eines neuronalen Netzwerks durchgeführt wird.

17. Verfahren nach einem der Ansprüche 1 - 15,
bei dem der Vergleich mittels eines abstandsmessenden oder eines statistischen Klassifikators durchgeführt wird.

Fig. 1

Fig. 2

Fig. 3

Fig. 4

Fig. 5

a)

b)

c)

d)

Fig. 6

Europäisches
Patentamt

**EUROPÄISCHER RECHERCHENBERICHT**

Nummer der Anmeldung

EP 95 11 6062

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | WO-A-89 09941 (BOSCH GMBH ROBERT) 19.Oktober 1989 • <br> * Seite 3, Zeile 20 - Seite 4, Zeile 25; Abbildung 1 * <br> --- | 1 | G01S7/539 G01S15/89 |
| A | TM/TECHNISCHES MESSEN , Bd. 55, Nr. 10, 1988 MÜNCHEN, DE, Seiten 367-376, BIEHL K.-E. ET AL: 'ULTRASCHALL-SYSTEME FUR DIE INDUSTRIELLE OBJEKTERFASSUNG UND -KLASSIFIZIERUNG' <br> * das ganze Dokument * <br> --- | 1 | |
| A | SENSORS AND ACTUATORS A, Bd. 31, Nr. 1 / 03, 1.März 1992 LAUSANNE, CH, Seiten 182-187, ABREU J M M ET AL 'ULTRASONIC ECHOES FROM COMPLEX SURFACES: AN APPLICATION TO OBJECT RECOGNITION' <br> * das ganze Dokument * <br> --- | 1 | |
| | | | **RECHERCHIERTE SACHGEBIETE (Int.Cl.6)** |
| A | SIGNAL PROCESSING THEORIES AND APPLICATIONS, BARCELONA, SEPT. 18 - 21, 1990, Bd. 3, 18.September 1990 ELSEVIER, AMSTERDAM, NL, Seiten 1687-1690, SUMIO WATANABE ET AL 'AN ULTRASONIC ROBOT EYE FOR THREE-DIMENSIONAL OBJECT RECOGNITION USING NEURAL NETWORK' <br> * das ganze Dokument * <br> ----- | 1,16 | G01S |

Der vorliegende Recherchenbericht wurde für alle Patentansprüche erstellt

| Recherchenort | Abschlußdatum der Recherche | Prüfer |
|---|---|---|
| DEN HAAG | 1.Februar 1996 | Haffner, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P04C03)